# EUROPEAN PATENT SPECIFICATION

(11) **EP 4 008 191 B1**
(45) Date of publication and mention of the grant of the patent: **20.11.2024**
(21) Application number: 21211544.8
(22) Date of filing: 01.12.2021
(51) Int. Cl.: A23K 10/30, A23K 20/158, A23K 20/163, A23K 50/10, A23K 50/30, A23K 50/75

(54) **IMPACT OF OLEIC GRAINS OR OIL ON THE QUALITY OF MEAT OF PIGS, CATTLE OR POULTRY**
AUSWIRKUNG VON OLEINKÖRNERN ODER ÖL AUF DIE FLEISCHQUALITÄT VON SCHWEINEN, RINDERN ODER GEFLÜGEL
IMPACT DE GRAINS OLÉIQUES OU D'HUILE SUR LA QUALITÉ DE LA VIANDE DE PORC, DE BÉTAIL OU DE VOLAILLE

(30) Priority: 01.12.2020 BE 202005867
(43) Date of publication of application: 08.06.2022
(73) Proprietor: Cosucra Groupe Warcoing S.A., 7740 Warcoing (BE)
(72) Inventor: PLANCKAERT, Philippe, 8510 Rollegem (BE)
(74) Representative: De Clercq & Partners

(56) References cited:
- US-A1- 2006 004 100
- US-A1- 2006 240 077
- US-A1- 2011 070 327
- RHEE K S ET AL: "Effect of dietary high-oleic sunflower oil on pork carcass traits and fatty acid profiles of raw tissues", MEAT SCIENCE, ELSEVIER SCIENCE, GB, vol. 24, 1 January 1988 (1988-01-01), pages 249 - 260, XP002968204, ISSN: 0309-1740, DOI: 10.1016/0309-1740(88)90038-1
- MAS G ET AL: "Carcass and meat quality characteristics and fatty acid composition of tissues from Pietrain-crossed barrows and gilts fed an elevated monounsaturated fat diet", MEAT SCIENCE, ELSEVIER SCIENCE, GB, vol. 85, no. 4, 1 August 2010 (2010-08-01), pages 707 - 714, XP027064291, ISSN: 0309-1740, [retrieved on 20100321], DOI: 10.1016/J.MEATSCI.2010.03.028
- M. ØVERLAND ET AL: "Easily fermentable carbohydrates reduce skatole formation in the distal intestine of entire male pigs", LIVESTOCK SCIENCE, vol. 140, no. 1-3, 1 September 2011 (2011-09-01), NL, pages 206 - 217, XP055347710, ISSN: 1871-1413, DOI: 10.1016/j.livsci.2011.03.032

## Description

### FIELD OF THE INVENTION

The invention is situated in the field of animal feed supplements, more particularly in the field of feed supplements for improving the quality and nutritional value of meat from pigs or cattle.

### BACKGROUND OF THE INVENTION

The meat industry is constantly looking for ways to improve the quality of meat from pigs and cattle in terms of e.g. fatty acid composition, drip loss and taste.

A major concern in the meat industry (both in pork, cattle and poultry meat) is drip-loss, the loss of fluid from the myocytes in the muscle tissue due to the anaerobic processes occurring in the meat after the animal is slaughtered. This can result in a serious reduction of profit for slaughterhouses and reducing drip loss hence has a high economic impact in the meat producing industry.

Furthermore, the unbalanced presence of unsaturated fatty acids in meat, such as an excess in saturated fatty acids, is seen as potentially inflammation-inducing in the consumer.

Another problem particularly associated with pig meat is that non-castrated male animals can develop a typical urine-like odor (called boar taint) caused by skatole, indole and androsterone present in the meat. The castration of pigs offered a solution to this but is becoming really an issue in EU, related to the well-being of animals. EU prohibition on castration has been proposed in 2012, but the lack of solutions to reduce boar taint have postponed the decision. There is more pression coming from organizations protecting the welfare of the animals and retailers are following the trend. Immuno-castration is the most plausible solution today, but a lot of consumers are rejecting such an approach, the cost is rather high per pig and the manual double injection of boars at high weight is not without risk for the farmer. A nutritional approach would be easier for the farmer and safe for the consumer, especially when using nutritional and healthy vegetable sources.

US 2006/0004100 provides a method for improving the meat quality of an animal, the method comprising feeding the animal a diet supplemented with oleic acid and selected tocols in amounts effective to improve the meat quality.

Rhee et al. (1988, Meat Science, 24, 249-260) describe the effect of dietary high-oleic sunflower oil on pork carcass traits and fatty acid profiles of raw tissues. Ten gilts were randomly assigned to either a control sorghum-soybean diet or a similar diet containing 12% high-oleic sunflower oil (HOSO). No significant differences between the two groups were found in feedlot performance, carcass muscling and marbling score, but animals fed the HOSO diet had softer carcass fat and oilier carcasses than those fed the control diet.

Mas et al. (2010, Meat Science, 85, 707-714) concerns carcass and meat quality characteristics and fatty acid composition of tissues from Pietrain-crossed barrows and gilts fed an elevated monounsaturated fat diet. Source of dietary fat had no effect on primal cut yields, composition of major primal cuts, or carcass and meat quality characteristics. Feeding a diet rich in oleic acid by feeding a by-product of the olive industry increased monounsaturated fatty acids and decreased polyunsaturated fatty acids proportions in fat depots reducing the risk of production of carcasses that are soft and oily which result in lower technological and processing quality.

US 2011/0070327 provides a method for improving the meat, milk, and egg quality of livestock, the method comprising feeding the animal a diet supplemented with oleic acid and distillers grains. The source of the oleic acid may be distillers grain from high-oleic corn. Breast and thigh meat yields, along with abdominal fat yield, were not different between treatment groups.

Chicory root and inulin have been used as animal feed supplements amongst others for reducing internal parasite infestation of worms, and for regulating food transit. Previously, studies on the boar taint in non-castrated entire males were performed on supplementing feeding with dried chicory root powder or shreds, or with inulin derived therefrom in the last weeks prior to slaughter (Hansen et al., 2006, Anim Sci 82:359-368; Nielsen et al., 2007, Sensory science report http://orgprints.org/12959/1/12959.pdf; Kjos et al., 2010, Livestock Science - September 2010, Vol. 134, Issue 1, Pages 143-145; Zammerini et al., 2010 British Society of Animal Science Annual Conference April 12 to 14, 2010, Queen's University, Belfast, pp181). Although some effects on boar taint were observed with dried chicory root, the studies were not very consistent as to the best composition and timing of the supplemental feed.

US 2006/0240077 provides a method and a product of a chicory root product for reducing taint in animals, said method comprising feeding to an animal a chicory root product during at least one day prior to slaughtering the animal.

Overland et al. (2011, Livestock Science, 140, 206-217) describe two experiments conducted to evaluate the effects of feeding different sources of easily fermentable carbohydrates to entire male pigs during the last weeks before slaughter. The results showed that easily fermentable carbohydrates reduce skatole formation in the distal intestine of entire male pigs.

In addition to boar taint issues, entire male pigs offer also very lean meat with a lower level of fat than the female pigs. Too low levels of intramuscular fat (IMF) are causing a lack of tenderness and taste (chops with only 0.5 to 1% of IMF) of meat and have a negative impact on consumption. Pig meat on average is expected to have around 2% IMF. Very lean meat has also a negative impact on some parts of meat that lack firmness. Meat derived from the belly is too soft if it lacks IMF.

The present invention intends to overcome at least some of the above problems.

### SUMMARY OF THE INVENTION

The present invention intends to act with vegetable safe feed ingredients both on scatole reduction and on improvement of meat quality parameters.

It is the merit of the applicant of having discovered that high oleic sunflower grains or oil derived therefrom can be used for the reduction of drip loss and of oxidative stress in meat derived from pigs, cows in general (both male and female pigs and cows) and in poultry and for increasing intramuscular fat (IMF).

In addition, high oleic sunflower grains or oil derived therefrom can be used for reducing boar taint in non-castrated male pigs and in the improvement of intramuscular fat presence in entire male pigs, as in improvement of IMF .

The inventors have additionally found that combining said high oleic sunflower grain or oil with dried chicory root powder or shreds is particularly beneficial for improving meat quality of uncastrated male pigs.

Hereto, the present invention provides subject-matter as set forth in any one and all of the appended claims 1 to 14.

In particular, a first aspect of the invention relates to the use of a feed ingredient or feed composition comprising a high oleic acid oil for increasing meat quality in pigs, cattle and poultry, wherein said meat quality is improved by reducing drip loss in meat from pigs, cattle and poultry, wherein said feed composition is fed to the animals in an amount of from 2 to 15% on the total feed. More preferably in an amount of from 2 to 10%, 2 to 8%, 2 to 6%, 3 to 5% or of about 4%.

This aspect applies to both male pigs (boars) and cattle (bulls) and female pigs (gilts) and cattle (cows), young animals such as piglets and veal, and to poultry that is bred for meat production such as chickens and other Galliformes such as turkey and the like. Typically said drip loss is reduced by at least 5%, preferably by at least 8%, more preferably by 10% or more.

In embodiments, said meat quality is further improved by improving the fatty acid composition of meat from pigs, cattle and poultry.

This embodiment applies to both male pigs (boars) and cattle (bulls) and female pigs (gilts) and cattle (cows), young animals such as piglets and veal, and to poultry that is bred for meat production such as chickens and other Galliformes such as turkey and the like.

In embodiments, improving the fatty acid composition of meat encompasses any one or more of the following:
the reduction of Omega-6 fatty acids by at least 5%, such as by 6%, 7% or 8% or more,
the increase of Omega-9 fatty acids by at least 5%, such as by 6%, 7% or more, and
the decrease of the ratio of Omega-6 versus Omega-3 fatty acids by at least 40%, such as by 50% or more or by 60% or more.

In embodiments, said meat quality is further improved by increasing intramuscular fat content in meat from pigs, cattle and poultry.

Although this embodiment applies to both male pigs (boars) and cattle (bulls) and female pigs (gilts) and cattle (cows), as well as to young animals such as piglets and veal, and to poultry that is bred for meat production such as chickens and other Galliformes such as turkey and the like, it is especially important for the improvement of intramuscular fat content in entire boars.

Typically said IMF content is increased by at least 3%, preferably by at least 5%, or more.

Another measure for IMF and for the quality of the meat is the mechanical force needed to tear the meat apart (tearing force).

Typically, said tearing force is higher in meat having a higher degree of IMF. As an example the tearing force of the meat of animals fed with the food composition as taught herein is increased by about 5% or more.

In embodiments, said meat quality is further improved by reducing oxidative stress in meat from pigs, cattle and poultry after slaughter.

This embodiment applies to both male pigs (boars) and cattle (bulls) and female pigs (gilts) and cattle (cows), as well as to young animals such as piglets and veal, and to poultry that is bred for meat production such as chickens and other Galliformes such as turkey and the like.

Typically said oxidative stress is reduced by at least 5%, preferably by at least 8%, more preferably by 10% or more.

In embodiments, said high oleic acid oil is derived from plant material having an oleic acid content of at least 70% on the total fatty acid content.

In embodiments, said high oleic acid oil is derived from sunflower or safflower oil, or from the seeds or grains of the sunflower or safflower plant.

In embodiments, said meat quality is improved by reducing boar taint in entire male pigs, preferably by reducing the androstenone concentration in meat and/or by increasing the IMF in meat.

The risk of boar taint perception in meat can be quantified by measuring the level of skatole and androstenone in the meat.

In order to sufficiently reduce boar taint to avoid consumer issues, the level of skatole needs to be below 150ppb and/or the level of androstenone needs to be below 1000ppb.

In embodiments, said feed composition further comprises dried chicory root powder, or shreds, preferably in an amount of from about 3% to about 10% on the total feed, such as from 4 to 8% on the total feed, such as about 7%. This amount can be containing either dried chicory root powder (such as the commercial product Fibrofos^{™} 60 from Cosucra) or dried chicory shreds (such as the commercial product Fibrofos^{™} 60 from Cosucra), or can be a mixture of both, such as a mixture of from 10/90 to 90/10 powder/shreds, preferably in a ratio of 20/80 to 80/20, such as in a ratio of 30/70 to 70/30, 40/60 to 60/40, or 50/50 of powder/shreds.

In a particular example, said dried chicory root component comprises 4-6% (about 5%) of dried chicory powder and 1-3%, such as about 2% of dried chicory shreds.

In a preferred embodiment, said dried chicory root component is in the form of powder or shreds comprises: inulin (about 65%); sesquiterpene lactones, typically selected from lactucine, dihydrolactucine, lactucopicrine and dihydrolactucopicrine; and pulp fraction, typically comprising soluble and insoluble fibers such as pectins and cellulose,

More preferably, said dried chicory root component comprising at least 50 wt.% of inulin, preferably more than 60 wt.% of inulin, wherein said inulin typically has an average degree of polymerization by number of at least 3.

Preferably, the species of chicory is Cichorium intybus L..

The dried chicory root composition, typically has a dry matter content of 88% w/w or more, preferably of 89% w/w or more, more preferably of 90% w/w or more. This is corresponding to a moisture content of between about 8 and 12 % w/w, preferably of between 9 and 11% w/w.

The dried chicory root composition, typically comprises or consists essentially of: particles having an average diameter of less than 2mm, preferably approximately 0.1 to 2mm, preferably between about 0.5 to 1.5mm, more preferably of about 1mm; or comprising dried chicory root flakes or shreds, preferably having an average size of between 3 cm and 15 mm, preferably between 2 cm and 15 mm.

The dried chicory root composition typically consists essentially of a natural product which has been processed physically only, i.e. by washing with water, drying, grinding, optionally followed by a second drying step and fine grinding or milling into small particles of average particle size as depicted herein. The raw chicory root material has not been subjected to chemical treatment with solvents or extraction means etc. in order to reach the dried chicory root composition.

In embodiments, said feed composition further comprises pea-starch, preferably in an amount of 2 to 4%, such as about 3% on the total feed.

In embodiments, said feed composition further comprises dried chicory root pulp fraction. Typically said pulp fraction is the rest-product of inulin extraction from chicory root and comprises inulin (about 4%), fibrous pectins (about 25%), hemicellulose and cellulose.

In embodiments, said feed composition is fed to the animals minimally about 3 days before slaughter, such as 3, 4, 5, 6, or 7 days or about 1 week before slaughter such as about 6 to 8 days before slaughter, or more, such as 8, 9, 10, 11, 12, 13, or 14 days before slaughter, or longer, such as e.g. at least 2 weeks before slaughter, preferably 3 weeks before slaughter, more preferably 4 weeks before slaughter, most preferably at least 5 to 6 weeks before slaughter.

In embodiments, said feed composition is fed to the animals, minimally about 3 days before slaughter, such as 3, 4, 5, 6, or 7 days before slaughter or about 1 or 2 weeks before slaughter such as 9, 10, 11, 12, 13, or 14 days before slaughter.

In embodiments, wherein said feed composition is fed to the animals at least 2 weeks before slaughter, preferably at least 3 weeks before slaughter, more preferably at least 4 weeks before slaughter, most preferably at least 5 to 6 weeks before slaughter.

In yet another embodiment, the feed composition comprises high oleic acid oil in an amount of from 2 to 10% on the total feed. More preferably in an amount of from 2 to 8%, 2 to 6%, 3 to 5% or of about 4%. In an embodiment, said high oleic acid oil is derived from plant material having an oleic acid content of at least 70% on the total fatty acid content.

In an embodiment, said high oleic acid oil is derived from sunflower or safflower oil, or from the seeds or grains of sunflower or safflower.

In an embodiment, the feed composition further comprises dried chicory root powder, or shreds, preferably in an amount of from about 3% to about 10% on the total feed, such as from 4 to 8% on the total feed, such as about 7%. This amount can be containing either dried chicory root powder (such as the commercial product Fibrofos^{™} 60 from Cosucra) or dried chicory shreds (such as the commercial product Fibrofos^{™} 60 from Cosucra), or can be a mixture of both, such as a mixture of from 10/90 to 90/10 powder/shreds, preferably in a ratio of 20/80 to 80/20, such as in a ratio of 30/70 to 70/30, 40/60 to 60/40, or 50/50 of powder/shreds.

In a particular example, said dried chicory root component comprises 4-6% (about 5%) of dried chicory powder and 1-3%, such as about 2% of dried chicory shreds.

In a preferred embodiment, said dried chicory root component is in the form of powder or shreds comprises: inulin (about 65%); sesquiterpene lactones, typically selected from lactucine, dihydrolactucine, lactucopicrine and dihydrolactucopicrine; and pulp fraction, typically comprising soluble and insoluble fibers such as pectins, hemicellulose and cellulose,
More preferably, said dried chicory root component comprising at least 50 wt.% of inulin, preferably more than 60 wt.% of inulin, wherein said inulin typically has an average degree of polymerization by number of at least 3.

Preferably, the species of chicory is Cichorium intybus L..

The dried chicory root composition, typically has a dry matter content of 88% w/w or more, preferably of 89% w/w or more, more preferably of 90% w/w or more. This is corresponding to a moisture content of between about 8 and 12 % w/w, preferably of between 9 and 11% w/w.

The dried chicory root composition, typically comprises or consists essentially of: particles having an average diameter of less than 2mm, preferably approximately 0.1 to 2mm, preferably between about 0.5 to 1.5mm, more preferably of about 1mm; or comprising dried chicory root flakes or shreds, preferably having an average size of between 3 cm and 15 mm, preferably between 2 cm and 15 mm.

The dried chicory root composition typically consists essentially of a natural product which has been processed physically only, i.e. by washing with water, drying, grinding, optionally followed by a second drying step and fine grinding or milling into small particles of average particle size as depicted herein. The raw chicory root material has not been subjected to chemical treatment with solvents or extraction means etc. in order to reach the dried chicory root composition.

In an embodiment, the feed composition further comprises pea-starch, preferably in an amount of 2 to 10%, such as 2 to 8%, 2 to 6%, 2 to 4%, such as about 3% on the total feed.

In an embodiment, the feed composition further comprises a dried chicory root pulp fraction preferably in an amount of about 1 to 10%, such as 1 to 8%, 1 to 6%, 1 to 4%, on the total feed. Typically said pulp fraction is the rest-product of inulin extraction from chicory root and comprises inulin (about 4%), fibrous pectins (about 25%), hemicellulose and cellulose.

### BRIEF DESCRIPTION OF THE DRAWINGS

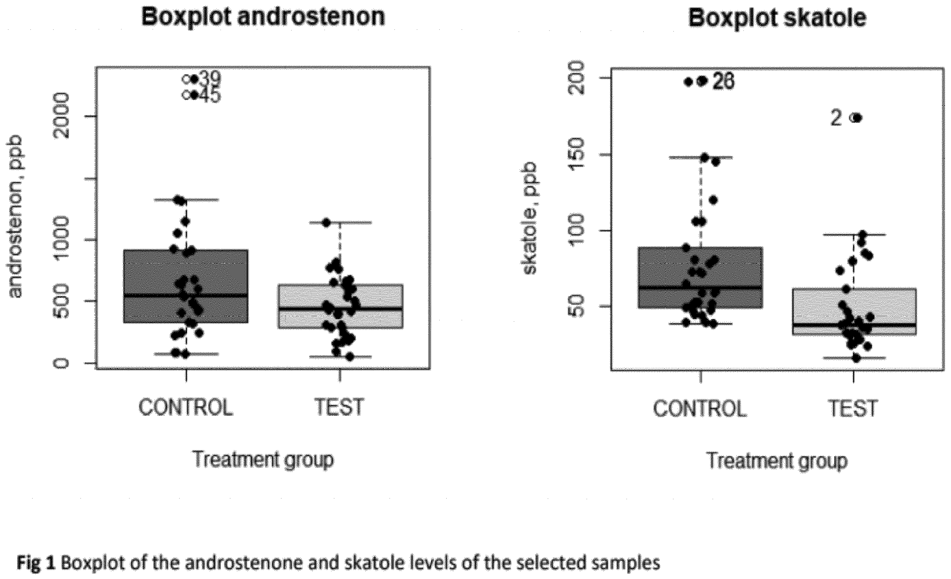

**Figure 1****:** Boxplot of the skatole and androstenone levels in non-castrated boars (Danbred x Turbo Pietrain) in control animals versus test animals given a feed composition as taught herein during the 10 last days before slaughter. The boxplot shows that in test animals the average levels for skatole and androstenone are reduced versus control animals. Particularly the level of skatole is reduced quite significantly.

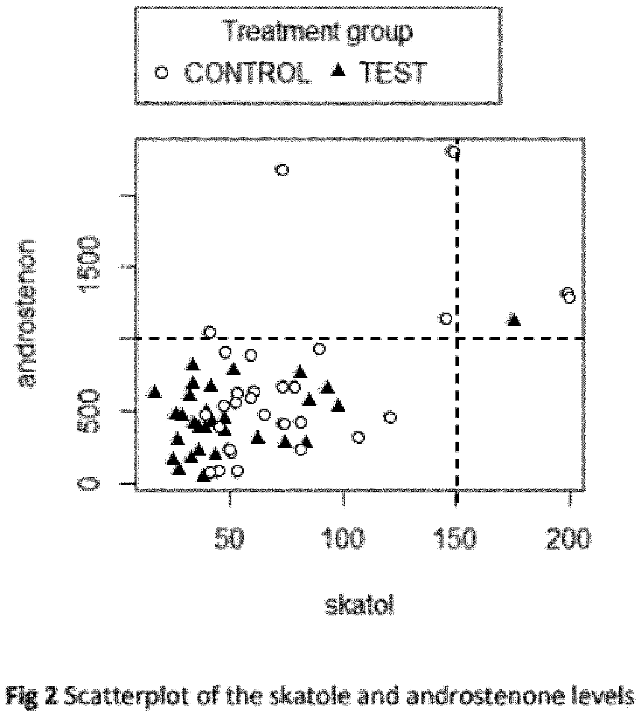

**Figure 2****:** Scatterplot of the skatole and androstenone levels in non-castrated boars (Danbred x Turbo Pietrain) in control animals versus test animals given a feed composition as taught herein during the 10 last days before slaughter. From the scatterplot it becomes clear that the animals in the control group show a more heterogenic profile in both skatole and androstenone levels that the test group. The dashed lines in the figure represent the alarm levels for creating boar taint of both components.

### DETAILED DESCRIPTION

Before the present method of the invention is described, it is to be understood that this invention is not limited to particular methods, components, products or combinations described, as such methods, components, products and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of", as well as the terms "consisting essentially of", "consists essentially" and "consists essentially of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-20% or less, preferably +/-10% or less, more preferably +/-5% or less, and still more preferably +/-1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the following detailed description of the invention, reference is made to the accompanying drawings that form a part hereof, and in which are shown by way of illustration only of specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

### Feed composition

The feed composition or ingredient used herein comprises an oleic acid component (omega-9 fatty acids), optionally combined with linseed oil and/or dried chicory root powder or shreds, or inulin, and/or pea starch.

### Oleic acid component with Omega-9 fatty acids

Omega-9 fatty acids are present in different types of oils and seeds, but typically in high oleic acid oils such as in sunflower and safflower. With the term "high oleic" is meant oil compositions wherein at least 70% of the fatty acids are monosaturated oleic acid. For example, high oleic sunflower oil is often designated as >70% oleic but can easily will comprise 80% oleic acid or more. Safflower oil will typically comprise 75% oleic acid or more. The oleic acid component in the feed composition will typically comprise oleic sunflower grains, ground and optionally protected with an antioxidant agent such as butylhydroxytoluene (BHT), propyl gallate, or combinations thereof.

Such a product is commercially available under the name Alpha-Omega-9 from Socode - Cosucra Belgium, which comprises oleic sunflower grains, ground and protected with antioxidant. Alpha-Omega-9 is a quite rich source of vegetable oil (around 45%), and particularly rich in oleic acid (80% of the oil). The omega-9 unsaturated fatty acids (C18-1n9) are recommended to improve health and to be used at higher levels (x 4 times) than C18:2-n6 unsaturated fatty acids characterized as pro inflammatory.

Alpha-Omega-9 is also specifically rich in natural α-tocopherol (309 mg/kg), a high biologic available source of vitamin E, which is a natural antioxidant being 2 to 3 times more efficient to reduce the free radicals in the body compared to synthetic vit. E. α-tocopherol acts post-mortem to delay oxidative deterioration of the meat (improves better color retention). Sunflower kernel has a nutty taste, which is in the line of the peanut with pata negra.

The oleic acid component will have a positive effect on drip loss, IMF and oxidation in the meat of both female and male animals as described elsewhere. Additionally, the oleic acid will have an effect on the androstenone formation, one of the components responsible for boar taint in non-castrated male pigs. Hence, while the dried chicory root component is known to act mostly on skatole formation, the oleic acid component will work on the androstenone level and hence be complementary in avoiding boar taint.

### Linseed oil component (with Omega-3 and -9 fatty acids)

The linseed oil component can be derived from linseed plant material such as oil or seeds. It can be provided in the feed compositions described herein in the form of flattened or laminated linseed, optionally comprising an antioxidant agent such as butyl hydroxytoluene (BHT), propyl gallate. Prepared like this, the oil stays linked to the fibres fraction and the natural antioxidants of the seeds (e.g. alpha tocopherols) remain intact. Additional antioxidants can be added to increase the stability of the seeds.

Such a linseed component is commercially available under the name LIN+ from Socode - Cosucra Belgium.

Such linseed (or flaxseed) oil comprises many essential fatty acids such as the omega-3 alpha-linolenic acid (C18:3) and omega-9 oleic acid (C18: 1).

### Pea-starch

The pea starch component in the feed compositions described herein can be derived from peas such as yellow peas (Pisum sativum), and is obtained by crushing peas in an aqueous environment. The starch component can be commercially obtained under the name Nastar^{™} from Socode - Cosucra Belgium. Typically a pea starch composition comprises about 98 to 100% carbohydrates, of which is typically about 20% resistant, i.e. not hydrolysed in the small intestine, but fermented in the large intestine, where it can capture non-digested tryptophane amino acids which otherwise could lead to ammonia and subsequently skatole formation leading to boar taint in male pigs.

### Dried chicory root powder, shreds, and pulp

The term "chicory root" as used herein refers to the root of chicory, in a preferred example, the species of chicory is Cichorium intybus L species.

Chicory root comprises two main components, inulin and pulp. The raw chicory root comprises about 20-25 % of dry matter, which contains between 16-17% inulin. When dried up to a dry matter content of around 90%, this results in an inulin concentration in the dried chicory root composition of above 60%, typically of about 65%. Said inulin has an average degree of polymerization by number of at least 3. Additional components of the chicory root composition are sesquiterpene lactones such as the ones selected from: lactucine, dihydrolactucine, lactucopicrine and dihydrolactucopicrine. Typically, in a concentration of around 0.4 wt. %. The pulp fraction comprises soluble and insoluble fibers (e,g, pectins and cellulose).

The composition comprising **dried chicory root shreds or flakes,** can be produced by drying the raw chicory root and processing it in flakes of roughly 5 cm to 15 mm, preferably 3 cm to 15 mm, such as between 2 cm and 15 mm and re-drying said flakes. For example, an indirect drying unit with gas can be used during which the product will typically dry during 7 hours at temperatures of between 70 to 100°C. The heating can be performed at a temperature of between 50 and 80°C, preferably between 60 and 70°C. Said drying step is typically done for at least 30 minutes, such as about 1 or 1.5 hours. Preferably the temperature is kept below 70°C to avoid breakdown of the product. Such dried chicory root flakes or shreds are commercially available from under the name Fibrofos^{™} 60 from Socode - Cosucra, Belgium. Chicory root from direct drier is also useable and temperatures can go up to 200°C and the drying during e.g. 2 hours. As long as no burned particles occur, it is not expected that inulin or sesquiterpene lactones are very sensible to a conventional (direct) drying process.

The composition comprising **dried chicory root powder** can be produced by grinding the flakes obtained above into small particles of approximately 0.1 to 2 mm, preferably between 0,5 to 1,5 mm, preferably of about 1 mm. The mean particle size can be measured by any known technique such as sieving with a mesh having known sizes of openings and typically will be represented by any one of D10 (= arithmetic or number mean), D32 (= volume/surface mean (also called the Sauter mean)), or D43 (= the mean diameter over volume (also called the DeBroukere mean)). The final dried chicory root product has a dry matter content of 88% w/w or more, preferably of 89% w/w or more, more preferably of 90% w/w or more, corresponding to a moisture content of between about 8 and 12 % w/w, preferably of between 9 and 11% w/w. The composition disclosed herein is a natural composition, which has substantially not been treated chemically. Said dried chicory root composition comprises inulin, sesquiterpene lactone and chicory root pulp fraction (the fibre matrix of the inlulin). Such dried chicory root powder is commercially available from under the name Fibrofos^{™} 60 from Socode - Cosucra, Belgium.

The composition comprising chicory root **"pulp"** refers to the pulp fraction comprised in the chicory root. It is mainly composing of soluble and insoluble fibres with a high-water retention capacity. Said fraction can be obtained as the rest-product of inulin extraction from said chicory root material and subsequent dehydration at low temperature (e.g. max 80° C). Chicory pulp is known to assure a better transit regulation in animals due to its high swelling capacity: Such products are commercially available from Socode - Cosucra, Belgium.

As used herein, the term **"inulin"** refers to a mixture of oligo- and/or polysaccharides of fructose which may have a terminal glucose. Inulins belong to a class of fibers known as fructans. Inulins for use in the present invention can also encompass the hydrolysis products of inulins such as fructo-oligosaccharides (FOS), also called oligofructoses, which are fructose oligomers with a DP of ≤ 20, and they can also encompass fructo-oligosaccharides ending with a terminal glucose with a DP of 3-5 synthesized from sucrose. Preferably said fructo-oligosaccharides have an average DP by number of at least 3 and at most 7. Suitable saccharide chains of inulin from plant origin for use in the invention can have a DP ranging from 2 to about 100. Inulin can be a liquid or a powder product.

As used herein, the term **"sesquiterpene lactones"** refers to a class of chemical compounds, called sesquiterpenoids (built from three isoprene units) and contain a lactone ring. Sesquiterpene lactone are comprising at least artemisinin, Lactucin, desoxylactucin, lactucopicrin, lactucin-15-oxalate, lactucopicrin-15-oxalate.

The term antioxidant as used herein is added to protect the oil from oxidation. Exemplary antioxidants are BHT, and propyl gallate (e.g. Paradigmox White from Kemin/T) or natural antioxidant based on rosemary and tocopherol extracts (e.g. Naturox^{™}).

### Uses of the feed composition

The feed composition as described herein is of use in improving meat quality in pigs (boars, gilts, and piglets), in cattle (cows, bulls, veal) and poultry (Galliformes such as chicken, duck, goose, quail, emu, peafowl, ostrich, pigeon, pheasant, and turkey).

The feed described herein comprising an oleic oil component and optionally a dried chicory root component and a linseed component finds different uses in improving meat quality in pigs and cows.

As a first effect, lowering the presence of saturated fatty acids is envisaged since these are seen as responsible for LDL cholesterol increase and accompanying health effects such as atherosclerotic disorders.

In addition, the balance between different unsaturated fatty acids Omega-6/Omega-3 can be improved. The EU public health recommendation is to have a ratio of 5/1, while the scientific community recommends a ratio of 3/1. However, today, the average consumer easily ends up with a ratio of 15-20/1. A reduction of the amount of Omega-6 fatty acids in meat is hence desirable.

Furthermore, the addition of the Omega-9 fatty acid from the oleic oil component results in an increase in the intramuscular fat composition (IMF), which is important for the taste, the bite and the firmness (tearing force) of the meat of both pigs and cows. Especially in male pigs, which generally have less IMF than female pigs, the addition of said Omega-9 fatty acids has a positive effect on the IMF.

In addition, the addition of Omega-9 fatty acids in the form of high oleic oils or seeds, results in a number of additional meat quality improvements, i.e. reduced drip loss, reduced oxidation in the meat, improved tear force (i.e. reduced tear force values) indicating an increased firmness of the meat, and an improvement of dark red color of the meat. The increased firmness of the meat is due to reducing the poly-unsaturated fatty acids and increasing mono-unsaturated fatty acid in the meat and is an important approach for the firmness of the bellies (*viande du ventre*) of the uncastrated pigs. Higher figures of 'tear force' indicate that the meat is less tender and as see in the examples section using LIN+ and Alpha-Omega-9 during 6 weeks on female pigs, the meat is more tender, i.e. the tear force value on the test group is lower.

The addition of said Omega-9 fatty acid from the oleic oil component also has an effect on boar taint, which is related to the presence of alpha-tocopherols and phytosterols in oleic oil components such as derived from oleic sunflower seeds or oil.

Those components avoid production of free radicals, and so improve meat and fat stability (also postmortem). Oleic sunflower seeds also accumulate high amounts of caffeoylquinic acids (CQAs) including chlorogenic acid: 5-CQA AND 1.5 diCQA. These CQA are interesting for the solubilizing of toxins and steroids in the liver (similar or complementary effect as the chicory root but at much higher levels) and are also acting as antioxidant. Improving the unsaturated fatty acid concentration in the formula lowers the levels of androstenone, skatole and indole. A published study of Daniel Mörlein and Ernst Tholen (Meat Science, Volume 99, January 2015, Pages 1-7) has shown this using linoleic sunflower oil (having less than 60% oleic acid). The use of high oleic sunflower seeds (or oil) additionally decreases the Omega-6 fatty acid content and increases the Omega-9 fatty acids that are anti-inflammatory, being healthier for the animal and the final consumer.

When combined with a dried chicory root component, the effect on boar taint reduction in non-castrated pigs can be even higher. If only a reduction of boar taint is envisaged, it can be sufficient to add the feed composition comprising oleic acid and optionally the dried chicory root component and/or linseed to the animals at day three prior to slaughtering.

A small level (around 1.5 to 2.5%, such as about 2%) of flattened linseed can be added to the feed composition to improve the unsaturated fatty acid level with some Omega-3 FA. This is especially of interest in gilts. Using linseed for e.g. uncastrated boars is not so recommended, since the omega-3 fatty acids are less stable fats, and more sensible to off-flavors (rancid flavor) and soft meat.

Chicory root also stimulates the expression of Cyp450 1A and has antioxidant properties.

The feed composition as described herein comprising oleic sunflower oil or sunflower seeds can be used to improve the tenderness (IMF) of poultry meat. The quick growth of fattening chickens are causing "white striped" meat on breast. Those fat stripes make the meat less tender, and are causing higher drip loss. The quick growth also causes oxidation in the muscle, specifically at the age of 18 -20 days. A diet with the feed composition as described herein comprising oleic sunflower oil or sunflower seeds and it's high level of alpha-tocopherol' can help improving the tenderness of poultry meat.

The feed composition as described herein comprising the oleic acid component (e.g. 2 to 10% Alpha-Omega-9 can also be used in fattening veal. Veal meat is often used or sold as ¨white¨meat and the consumer is hence very sensitive to off-colours. This implies that in feed compositions the amount of iron needs to very low in order to avoid decoloration to off-white. For this reason, the feed component needs to have an iron content of less than 100mg/kg. The oleic oil component such as Alpha-Omega-9 has an iron content of less than 50 mg/kg. The present disclosure is further explained in the examples below, which are not to be seen as limiting the scope of protection of the invention.

### EXAMPLES

### Example 1 not according to the claimed invention: Effect on boar taint of adding a feed composition comprising oleic acid and dried chicory root powder and shreds in feed of non-castrated boars.

This example intended to quantify the effect of a feed composition as taught herein on reducing boar taint in non-castrated boars by sensorial and chemical analysis.

Two groups of 96 non-castrated boars (genetics: Danbred x Turbo Pietrain) were included in the analysis. They were grouped per 14 animals during the test.

The first group received standard feed predominantly based on wheat (30%) and barley (15%), while the second group received the same standard feed, supplemented by the feed composition below during the 10 last days before slaughter.

The feed composition comprised:
- 5% dried chicory root powder (Fibrofos^{™} 60 from Socode - Cosucra, Belgium)
- 3% native pea-starch (Nastar^{™} from Socode - Cosucra, Belgium)
- 2 % pulp of dried chicory root shreds (1 mm)
- 4% oleic sunflower seeds (Alpha-Oméga-9 from Socode - Cosucra, Belgium).

### 1.1. Hot iron method

The first test carried out on meat derived from the slaughtered animals was done in the slaughterhouse using the hot iron method to detect boar taint sensorially:
In the control group, 10 carcasses tested positive for boar taint, while in the test group, 6 carcasses tested positive for boar taint.

It is noted that the intensity of the boar taint is not measurable by this sensorial method.

### 1.2. Sensory test panel:

A sensory panel test was carried out by the RESEARCH INSTITUTE FOR AGRICULTURE, FISHERIES AND FOOD (ILVO - Belgium) on samples from animals randomly taken from both the test and control groups.

1% of the samples from the control group were evaluated as having boar taint in a sensorial test, while in the test group none of the samples was evaluated as positive.

The sensorial score was :

| | |
|---|---|
| Control group : | 0,07+/-0,24 |
| Test group : | 0,06 +/- 0,13 |

This indicates that the detection of boar taint (sensorial perception of boar taint) was reduced in test animals versus control animals.

### 1.3. Chemical analysis

30 samples taken randomly from each animal group (test and control) were analysed by an independent laboratory (ELFI Analytik Gbr - Germany) specialized in analysing boar taint.

3,3% of the samples from the control group were evaluated as having boar taint in a sensorial test, while in the test group none of the samples was evaluated as positive.

The sensorial score for skatole was :

| | |
|---|---|
| Control group : | 0,07 +/-0,20 |
| Test group : | 0,04 +/-0,11 |

Chemical analysis of skatole was significantly different:

| | |
|---|---|
| Control group : | 97+/-43 ppb |
| Test group : | 50+/-32 ppb |

Chemical analysis of androstenone showed a tendency in favor of the test group with a lower variability in levels than in the control group:

| | |
|---|---|
| Control group : | 687 +/- 542 ppb |
| Test group : | 453 +/- 247 ppb |

6,7% of the control group samples had an androstenone level of above 2000 ppb, while none of the samples from the test group had such a high value.

The results of the analysis are represented in Table 1 below and in Figures 1 and 2.

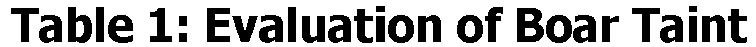

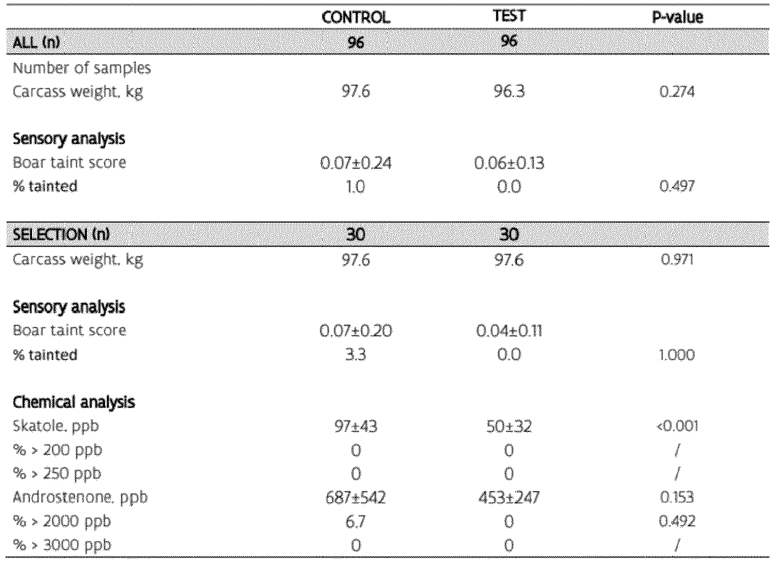

When set out in a Boxplot of the skatole and androstenone levels (cf. Figure 1) it become clear that in test animals the average levels for skatole and androstenone are reduced versus control animals. Particularly the level of skatole is reduced quite significantly.

When set out in a Scatterplot for skatole and androstenone (cf. Figure 2) it becomes clear that the animals in the control group show a more heterogenic profile in both skatole and androstenone levels that the test group.

When taking into account the boar taint risk level cut-off value for androstenone (1000 ppb), five control animals vs 1 test animal have amounts that surpass both risk level.

When taking into account the boar taint risk level cut-off values for skatole (150 ppb), three control animals vs 1 test animal have amounts that surpass both risk levels.

When taking into account the boar taint risk level cut-off values for both molecules (1000 ppb for androstenone and 150 ppb for skatole), three control animals vs 1 test animal have amounts that surpass both risk levels.

### 1.4. Conclusions:

These results are hence promising in that the risk of having boar taint in the meat of non-castrated entire pigs is reduced in animals that received the composition of dried chicory root and high oleic sunflower grains.

### Example 2: Analysis of improvement of meat quality of non-castrated male pigs receiving the feed composition as taught herein

Two groups of 250 non-castrated pigs (genetics: Pietrain) were compared, the test group receiving, on top of the standard feed, the feed composition as described in Example 1 above starting at day 9 before slaughter and a control group receiving standard feed without the feed composition. This study was performed in collaboration with the RESEARCH INSTITUTE FOR AGRICULTURE, FISHERIES AND FOOD (ILVO - Belgium).

Samples of meat from animals randomly selected within both groups were tested for drip loss, intramuscular fat composition, oxidative stress and fatty acid composition.

### 2.1. Drip loss

Drip loss or purge was measured as the percentage of the weight of the meat that is lost due to the fluid that is released from the tissue during storage of the carcasses after slaughter and was in this experiment measured a few hours after slaughter. For this, meat samples were weighed prior to and after drip loss (48h after slaughter) and expressed in percentage of weight loss. The measurements were done in duplicate on 15 meat samples of both the test and control group.

On average, the drip loss in the test group dropped from 10.1% (control) to 8.9% (test), which is a reduction of drip loss of 11.9%.

We believe this effect is purely attributable to the presence of Omega-9 fatty acids in the oleic oil component (high oleic sunflower seeds). The reason for this assumption is a previous study performed in collaboration with the RESEARCH INSTITUTE FOR AGRICULTURE, FISHERIES AND FOOD (ILVO - Belgium) in 2011 wherein Pietrain pigs were fed dried chicory root components only (5% fibrofos^{™} 60 and 5% pulp of dried chicory root shreds (1 mm)) and wherein no decrease in drip loss was seen versus the control group (Aluwé M. et al., 2011 - Chicory in boar feed: effect on boar taint and meat quality - 57th International Congress of Meat Science and Technology, 7-12 August 2011, Ghent-Belgium).

### 2.2. Intramuscular fat (IMF)

The IMF value is also improved in the test group versus the control group (1.33% versus 1.28 = + 3.9%), which is quite impressive given the short treatment period of 9 days. The effect will be even higher when starting adding the feed composition earlier. Also here, we believe the effect is mainly attributed to the Omega-9 fatty acids in the oleic oil component (high oleic sunflower seeds) since a similar effect on drip loss was obtained in example 5 below, without dried chicory root component.

### 2.3. Meat tearing force

As another parameter for measuring quality of the meat, the tearing force of the meat of animals fed with the feed composition as taught herein versus control animals was measured. An increase in tearing force indicates that the meat is less tender.

In an experiment on combination of LIN+ and Alpha-Omega-9 on female pigs during 6 weeks we observed the improved tenderness of the meat (control group: 42.86 Newton to 39.17 Newton for the test group), which is an improvement of 9% on tenderness of the meat.

### 2.4. Oxidative stress

The test of oxidation in the meat fat shows a higher stability in the test group: 0.14mg/malonaldehyde-eq/kg as compared to 0.16mg which is a reduction of oxidative stress of 12.5%.

This improvement is explained by the presence of alpha tocopherols (Vit E) naturally present in the high oleic acid component (Alpha-Omega-9).

### 2.5. fatty acid composition

The fatty acid composition of meat is important for health reasons and the addition of the feed composition used herein is important to improve said fatty acid composition is pig meat because pigs are monogastric and categorized as homolipoid organisms. Their fatty acid composition closely reflects the fatty acid composition of their diet. Using good healthy sources of unsaturated fatty acids in a diet will directly impact heath concerns in meat.

Indeed, the feed composition supplied at day 9 before slaughter already changed the fatty acid balance significantly (cf. Table 2). Administering said feed composition for a longer period will only improve these observations:

**Table 2: fatty acid composition**

| **Fatty acids** | **Control group** | **Test group** | **% Difference** |
|---|---|---|---|
| Saturated fatty acids | 38.1 | 37.6 | -1.3% |
| Mono-unsaturated fatty acids | 37.1 | 39.8 | +7.3% |
| Poly-unsaturated fatty acids | 24.8 | 22.6 | -8.9% |

### Example 3: Effect of feed composition on intramuscular fat and drip loss

A trial on beef (genetics: Belgian White Blue fattened cows) resulted in very low drip loss on the carcass. The cows were fed on a feed composition described below for about 100 days.

Feed composition:
- 3% oleic sunflower seeds + antioxidant (Alpha-Oméga-9 from Socode - Cosucra, Belgium).
- 3% Linseed (Omega-3 source - Lin+ from Socode - Cosucra, Belgium)

Drip loss was 0.78% in one analyzed case, while the average drip loss is known to be around 4 to 5% in Belgian White-Blue cattle.

### Example 4 not according to the claimed invention: Effect of feed composition on meat quality in beef of fattening cows

A trial on beef (genetics: Belgian White Blue fattened cows and Wagyu) was done whereby cows were fed on a standard feed composition during 111 days, supplemented with an amount of 350g/day linseeds and 350g/day sunflower seeds. During the last 38 days before slaughter, an extra 400g/day of oleic sunflower seeds was added to their feed.

Feed composition:
- Feed Super 20, comprising
- 3.5% oleic sunflower seeds + antioxidant (Alpha-Oméga-9 from Socode - Cosucra, Belgium) - during 111 days; and
- 3,5% Linseed (Omega-3 source - Lin+ from Socode - Cosucra, Belgium) - during 111 days;
- 400 g/day extra oleic sunflower seeds + antioxidant (Alpha-Oméga-9 from Socode - Cosucra, Belgium)- during the last 38 days.

The alpha-Omega-9 component is rich in alpha-tocopherol components. Alpha-tocopherols are a natural source of Vitamin E but are 2 to 3 times more efficient than the synthetic Vitamin E. The stability of meat will be improved since the fat components are more protected. The trials on beef and specifically on Wagyu resulted in a change from yellow fat to a healthy white fat on carcass by feeding bullocks a compound feed based on 3.5% Alpha-Omega-9.

### Example 5 not according to the claimed invention: Effect of the feed composition on the intramuscular fat of female fattening pigs

A test on 224 female pigs (genetics: Pietran Danbred) given the feed composition defined below for 6 weeks prior to slaughter, compared to a control group.

Feed composition:
- 4% oleic sunflower seeds + antioxidant (omega-9 source - Alpha-Oméga-9 from Socode - Cosucra, Belgium).
- 2% Flattened linseed + antioxidant (Lin+ from Socode - Cosucra, Belgium)

The feed composition improved the IMF with 23% (from 2.36% average IMF to 2.91%).

The test group had a slightly increased fat content in the feed it received due to the presence of the sunflower and linseed of 0.69% (control 3.26%, test group 4%), yet this cannot account for the large difference in IMF.

The addition of the linseed resulted also in an increase of 355.5% of C18:3n3 Omega-3 fatty acids, and 333% on C20:5n3 fatty acids.

We also expect that improving fat content, specifically with unsaturated fatty acids will also reduce boar taint and improve IMF. Improving IMF will have a positive impact by diluting the remaining skatoles in the meat. This dilution would make it easier to stay below the acceptable skatole limit (alarm level). Higher IMF has a direct impact on tenderness of meat. Reducing drip loss constitutes an important advantage for the slaughterhouses, the retail and consumers.

The oleic sunflower approach can replace part of the saturated fatty acids in feed and decrease the pro-inflammatory unsaturated fatty acid 'Omega-6'to a more acceptable level. Improving the level of unsaturated fatty acid in feed is resulting in more intramuscular fat, making meat more tender and tasteful.

In the study on the 224 female pigs receiving the feed composition above compared to a control group resulted in a Ratio Omega-6/Omega-3 of 10.6 versus 28.2. This is a significant improvement towards a reduction of Omega-6 fatty acids which are considered to have inflammatory properties.

Finally, the test group has darker red meat than the control group as measured by the CIELab method:

| **Color** | **Control group** | **Test group** | **Effect** |
|---|---|---|---|
| Color L 30 | 54.4 | 46.75 | Darker |
| Color a 30 | 7.45 | 10.3 | More red |
| Color b 30 | 16.2 | 16.8 | Equal |

### Example 6 not according to the claimed invention: A combination of oleic sunflower and linseed to approach the Spanish Pata Negra and Japanese Wagyu diet particularities:

A small level of flattened linseed, optionally in combination with an antioxidant can be added also to improve the unsaturated fatty acid level with some Omega-3 fatty acid, but this level need to be very limited to max. 2 % when used for feed for pigs, because of possible negative effect on stability of meat (risk of rancidity, and soft meat in case of higher levels). The addition of Omega-3 source is more justified in Omega-3 meat label products.

The combination of Omega-9 and Omega-3 and alpha-tocopherols is also matching with the typical diet of the Pata Negra based on acorn (source of Omega-9 and tocopherols) and grass (source of Omega-3 and alpha-tocopherols). The combination of both unsaturated fatty acids reduces saturated fatty acids and pro-inflammatory Omega-6 fatty acids. The content of oleic acid (C18:1) in the meat is quite high, and it has the particularity to decrease the LDL cholesterol.

We also notice a similar effect on decreasing LDL cholesterol with Wagyu (Japanese beef) meat that is very tender and well-marbled. The ratio of mono-unsaturated to saturated fatty acids for Wagyu meat is 2:1, while most European bovines do have a ratio 1:1.

### Example 7: Use of the feed composition for increasing IMF and decreasing drip loss in fattening veal

The feed composition comprising the oleic acid component (e.g. 2 to 10% Alpha-Omega-9 can also be used in fattening veal. Veal meat is often used or sold as ¨white¨meat and the consumer is hence very sensitive to off-colours. This implies that in feed compositions the amount of iron needs to very low in order to avoid decoloration to off-white. For this reason, the feed component needs to have an iron content of less than 100mg/kg. The oleic oil component such as Alpha-Omega-9 has an iron content of less than 50 mg/kg.

Increasing the amount of C18-1 fatty acids in order to decrease the PUFA is favorable for the conservation of the meat. Oleic acid components such as Alpha-Omega-9 comprise also a lot of Alpha-tocophérols (anti-oxidants e.g. Vit E), which will also increase the conservation of the meat.

The oleic acid component will also result in a reduction of the drip loss, which is pretty high in veal (4% in 24 h after slaughter and + 1% after that).

### Example 8: Use of the feed composition for increasing IMF and decreasing drip loss in fattening chickens

The feed composition comprising the oleic acid component (e.g. 2 to 10% Alpha-Omega-9 can also be used in fattening chickens. Increasing the IMF of chicken breast meat is very important in order to increase the tenderness of the meat. The quick growth of fattening chickens are causing "white striped" meat on breast. Those fat stripes make the meat less tender, and are causing higher drip loss. The quick growth also causes oxidation in the muscle, specifically at the age of 18 -20 days. A diet with the feed composition as described herein comprising oleic sunflower oil or sunflower seeds and it's high level of alpha-tocopherol' can help improving the tenderness of poultry meat.

Increasing the amount of C18-1 fatty acids in order to decrease the PUFA is favorable for the conservation of the meat. Oleic acid components such as Alpha-Omega-9 comprise also a lot of Alpha-tocopherols (antioxidants e.g. Vit E), which will also increase the conservation of the meat.

The oleic acid component will also result in a reduction of the drip loss, which is pretty high in chicken (4% in 24 h after slaughter and + 1% after that).

## Claims

1. Use of a feed composition comprising a high oleic acid oil for increasing meat quality in pigs, cattle and poultry, wherein said meat quality is improved by reducing drip loss in meat from pigs, cattle and poultry, wherein said feed composition is fed to the animals in an amount of from 2 to 15% on the total feed.

2. The use according to claim 1, wherein said drip loss is reduced by at least 5%.

3. The use according to claim 1 or 2, wherein said meat quality is further improved by improving the fatty acid composition of meat from pigs, cattle and poultry, selected from any one or more of the following:
- the reduction of Omega-6 fatty acids by at least 5%,
- the increase of Omega-9 fatty acids by at least 5%, and
- the decrease of the ratio of Omega-6 versus Omega-3 fatty acids by at least 40%.

4. The use according to any one of claims 1 to 3, wherein said meat quality is further improved by increasing intramuscular fat content in meat from pigs, cattle and poultry by at least 3%.

5. The use according to any one of claims 1 to 4, wherein said meat quality is further improved by reducing oxidative stress in meat from pigs, cattle and poultry after slaughter by at least 5%.

6. The use according to any one of claims 1 to 5, wherein said high oleic acid oil is derived from plant material having an oleic acid content of at least 70% on the total fatty acid content.

7. The use according to any one of claims 1 to 6, wherein said high oleic acid oil is derived from sunflower or safflower oil, or from the seeds or grains of the sunflower or safflower plant.

8. The use according to any one of claims 1 to 7, wherein said meat quality is further improved by reducing boar taint in non-castrated entire male pigs, preferably by reducing the androstenone concentration in meat to below 1000 ppb and/or by increasing the IMF in meat.

9. The use according to claim 8, wherein said feed composition further comprises dried chicory root powder or shreds, in an amount of from about 3% to about 15% on the total feed.

10. The use according to any one of claims 1 to 9, wherein said feed composition further comprises dried chicory root pulp fraction, preferably in an amount of about 1 to 6% on the total feed.

11. The use according to any one of claims 1 to 10, wherein said feed composition further comprises pea-starch, preferably in an amount of 2 to 6% on the total feed.

12. The use according to any one of claims 1 to 11, wherein said feed composition is fed to the animals minimally about 3 days before slaughter.

13. The use according to any one of claims 8 to 10, wherein said feed composition is fed to the animals, minimally about 3 days before slaughter.

14. The use according to any one of claims 1 to 7 and 11, wherein said feed composition is fed to the animals at least 2 weeks before slaughter.

## Patentansprüche

1. Verwendung einer Futtermittelzusammensetzung, die ein Öl mit hohem Ölsäuregehalt umfasst, zum Verbessern der Fleischqualität bei Schweinen, Rindern und Geflügel, wobei die Fleischqualität durch Verringern des Tropfverlusts in Fleisch von Schweinen, Rindern und Geflügel verbessert wird, wobei die Futtermittelzusammensetzung den Tieren in einer Menge von 2 bis 15 % des gesamten Futters gefüttert wird.

2. Verwendung nach Anspruch 1, wobei der Tropfverlust um wenigstens 5 % verringert wird.

3. Verwendung nach Anspruch 1 oder 2, wobei die Fleischqualität durch Verbessern der Fettsäurezusammensetzung von Fleisch von Schweinen, Rindern und Geflügel weiter verbessert wird, ausgewählt aus einem oder mehreren von:
- der Verringerung von Omega-6-Fettsäuren um wenigstens 5 %,
- der Zunahme von Omega-9-Fettsäuren um wenigstens 5 % und
- der Abnahme des Verhältnisses von Omega-6- zu Omega-3-Fettsäuren um wenigstens 40 %.

4. Verwendung nach einem der Ansprüche 1 bis 3, wobei die Fleischqualität durch Erhöhen des intramuskulären Fettgehalts in Fleisch von Schweinen, Rindern und Geflügel um wenigstens 3 % weiter verbessert wird.

5. Verwendung nach einem der Ansprüche 1 bis 4, wobei die Fleischqualität durch Verringern von oxidativem Stress in Fleisch von Schweinen, Rindern und Geflügel nach der Schlachtung um wenigstens 5 % weiter verbessert wird.

6. Verwendung nach einem der Ansprüche 1 bis 5, wobei das Öl mit hohem Ölsäuregehalt aus Pflanzenmaterial mit einem Ölsäuregehalt von wenigstens 70 % bezogen auf den Gesamtfettsäuregehalt abgeleitet ist.

7. Verwendung nach einem der Ansprüche 1 bis 6, wobei das Öl mit hohem Ölsäuregehalt aus Sonnenblumen- oder Distelöl oder aus den Samen oder Körnern der Sonnenblumen- oder Distelpflanze abgeleitet ist.

8. Verwendung nach einem der Ansprüche 1 bis 7, wobei die Fleischqualität durch Verringern von Ebergeruchs bei nicht kastrierten ganzen männlichen Schweinen, vorzugsweise durch Verringern der Androstenonkonzentration in Fleisch auf unter 1000 ppb und/oder durch Erhöhen des IWF in Fleisch, weiter verbessert wird.

9. Verwendung nach Anspruch 8, wobei die Futtermittelzusammensetzung ferner getrocknete Chicoreéwurzelpulver oder -schnitzel in einer Menge von etwa 3 % bis etwa 15 % bezogen auf das gesamte Futtermittel umfasst.

10. Verwendung nach einem der Ansprüche 1 bis 9, wobei die Futtermittelzusammensetzung ferner getrocknete Chicoreéwurzelpulpenfraktion umfasst, vorzugsweise in einer Menge von etwa 1 bis 6 % bezogen auf das gesamte Futtermittel.

11. Verwendung nach einem der Ansprüche 1 bis 10, wobei die Futtermittelzusammensetzung ferner Erbsenstärke umfasst, vorzugsweise in einer Menge von 2 bis 6 % bezogen auf das gesamte Futtermittel.

12. Verwendung nach einem der Ansprüche 1 bis 11, wobei die Futtermittelzusammensetzung den Tieren wenigstens etwa 3 Tage vor der Schlachtung gefüttert wird.

13. Verwendung nach einem der Ansprüche 8 bis 10, wobei die Futtermittelzusammensetzung den Tieren wenigstens etwa 3 Tage vor der Schlachtung gefüttert wird.

14. Verwendung nach einem der Ansprüche 1 bis 7 und 11, wobei die Futtermittelzusammensetzung den Tieren wenigstens 2 Wochen vor der Schlachtung gefüttert wird.

## Revendications

1. Utilisation d'une composition alimentaire comprenant une huile à haute teneur en acide oléique pour augmenter la qualité de la viande chez les porcs, les bovins et la volaille, dans laquelle ladite qualité de la viande est améliorée en réduisant la perte par exsudation dans la viande de porcs, de bovins et de volaille, dans laquelle ladite composition alimentaire est administrée aux animaux en une quantité de 2 à 15 % par rapport à la nourriture totale.

2. Utilisation selon la revendication 1, dans laquelle ladite perte par exsudation est réduite d'au moins 5 %.

3. Utilisation selon la revendication 1 ou 2, dans laquelle ladite qualité de la viande est en outre améliorée en améliorant la composition en acides gras de la viande de porcs, de bovins et de volaille, choisie parmi l'un quelconque ou plusieurs des éléments suivants
- la réduction d'au moins 5 % des acides gras oméga-6,
- l'augmentation d'au moins 5 % des acides gras oméga-9, et
- la diminution d'au moins 40 % du rapport des acides gras oméga-6 par rapport aux acides gras oméga-3.

4. Utilisation selon l'une quelconque des revendications 1 à 3, dans laquelle ladite qualité de la viande est en outre améliorée en augmentant la teneur en graisse intramusculaire dans la viande de porcs, de bovins et de volaille d'au moins 3 %.

5. Utilisation selon l'une quelconque des revendications 1 à 4, dans laquelle ladite qualité de la viande est en outre améliorée en réduisant le stress oxydant dans la viande de porcs, de bovins et de volaille après l'abattage d'au moins 5 %.

6. Utilisation selon l'une quelconque des revendications 1 à 5, dans laquelle ladite huile à haute teneur en acide oléique est dérivée d'une matière végétale ayant une teneur en acide oléique d'au moins 70 % par rapport à la teneur totale en acides gras.

7. Utilisation selon l'une quelconque des revendications 1 à 6, dans laquelle ladite huile à haute teneur en acide oléique est dérivée de l'huile de tournesol ou de carthame, ou des graines ou grains de végétal de tournesol ou de carthame.

8. Utilisation selon l'une quelconque des revendications 1 à 7, dans laquelle ladite qualité de la viande est en outre améliorée en réduisant l'odeur sexuelle chez des porcs mâles entiers non castrés, de préférence en réduisant la concentration d'androsténone dans la viande à moins de 1 000 ppb et/ou en augmentant l'IMF dans la viande.

9. Utilisation selon la revendication 8, dans laquelle ladite composition alimentaire comprend en outre de la poudre ou des lambeaux de racines de chicorée séchées, en une quantité allant d'environ 3 % à environ 15 % par rapport à la nourriture totale.

10. Utilisation selon l'une quelconque des revendications 1 à 9, dans laquelle ladite composition alimentaire comprend en outre une fraction de pulpe de racines de chicorée séchées, de préférence en une quantité d'environ 1 à 6 % par rapport à la nourriture totale.

11. Utilisation selon l'une quelconque des revendications 1 à 10, dans laquelle ladite composition alimentaire comprend en outre de l'amidon de pois, de préférence en une quantité de 2 à 6 % par rapport à la nourriture totale.

12. Utilisation selon l'une quelconque des revendications 1 à 11, dans laquelle ladite composition alimentaire est administrée aux animaux au minimum environ 3 jours avant l'abattage.

13. Utilisation selon l'une quelconque des revendications 8 à 10, dans laquelle ladite composition alimentaire est administrée aux animaux au minimum environ 3 jours avant l'abattage.

14. Utilisation selon l'une quelconque des revendications 1 à 7 et 11, dans laquelle ladite composition alimentaire est administrée aux animaux au moins 2 semaines avant l'abattage.
